# EUROPEAN PATENT SPECIFICATION

(11) **EP 1 241 100 B1**
(45) Date of publication and mention of the grant of the patent: **04.02.2004**
(21) Application number: 01830163.0
(22) Date of filing: 12.03.2001
(51) Int. Cl.: B65B 51/22, B29C 65/08

(54) **Ultrasonic transverse sealing method and device for sealing walls of a packaging material filled with a pourable food product**
Verfahren und Vorrichtung zum Ultraschallquerversiegeln der Wände eines mit einem fliessfähigen Nahrungsmittel gefüllten Verpackungsmaterials
Procédé et dispositif de scellement transversal par ultrasons des parois d'un matériau d'emballage rempli d'un produit alimentaire fluide

(43) Date of publication of application: 18.09.2002
(73) Proprietor: Tetra Laval Holdings & Finance S.A., 1009 Pully (CH)
(72) Inventor: Anderstedt, Jan, 271 50 Ystad (SE); Capasso, Salvatore, 41100 Modena (IT); Knutsson, Kent, 261 61 Landskona (SE)
(74) Representative: Franzolin, Luigi

(56) References cited:
- EP-A- 0 076 966
- PATENT ABSTRACTS OF JAPAN vol. 016, no. 141 (M-1232), 9 April 1992 (1992-04-09) -& JP 04 001028 A (SEKISUI PLASTICS CO LTD), 6 January 1992 (1992-01-06)

## Description

The present invention relates to an ultrasonic transverse sealing method for sealing walls of a packaging material filled with a pourable food product.

Sealing methods of the above type are employed by sealing devices on machines for packaging pourable food products, e.g. fruit juice, wine, tomato sauce, pasteurized or long-storage (UHT) milk, etc., and on which packages are formed from a continuous tube of packaging material defined by a longitudinally sealed web.

The packaging material has a multilayer structure comprising a layer of paper material covered on both sides with layers of heat-seal plastic material, e.g. polyethylene; and, in the case of aseptic packages for long-storage products, such as UHT milk, the packaging material also comprises a layer of barrier material superimposed on a layer of heat-seal plastic material and in turn covered with another layer of heat-seal plastic material defining the inner face of the package eventually contacting the food product.

The web of packaging material is unwound off a reel, is folded into a cylinder, and is sealed longitudinally to form, in known manner, a continuous, vertical, longitudinally sealed tube. The tube of packaging material is filled continuously with the pourable food product and then fed to a forming and transverse sealing unit for forming the individual packages. The forming and sealing unit comprises said transverse sealing devices, each of which comprises two jaws for gripping and transversely sealing the tube to form pillow packs, which are separated from one another by cutting the sealed portions between the packs. One of the jaws comprises an ultrasonic-vibration generator for exciting the molecules of the heat-seal plastic material gripped between the jaws, and melting the heat-seal plastic material to seal the walls. In other words, the jaws deform and compress the walls of the tube locally at the ultrasonic transverse sealing stage.

Once the transverse sealing operation is completed, a knife is activated to cut the tube of packaging material along the centerline of the sealed portion or between two sealed portions, and so cut a pillow pack off the bottom end of the tube of packaging material.

The pillow packs are then fed to a final folding station where they are folded mechanically into the finished packages.

Since the efficiency of ultrasonic sealing is directly proportional to the pressure exerted by the jaws on the walls of the tube, the jaws are pressed together with considerable force to exert relatively high pressure along the contact portion or so-called seal portion of the walls.

While, on the one hand, assisting ultrasonic melting of the heat-seal plastic material, such high pressure, on the other hand, is harmful in the case of transverse sealing, by extruding part of the heat-seal plastic material, which, when melted and subjected to the pressure exerted by the jaws, migrates from the transverse seal portion towards the tube containing the food product, and, on contacting the food product, sets to form lumps attached to the seal portion.

Since the walls of the tube of packaging material converge towards the seal portion, the lumps are gripped between the walls and may result in tearing of the packaging material or any of its layers.

See e.g. EP 76966 A1, which discloses a method and apparatus in accordance with the preambles of claims 1 and 7.

It is an object of the present invention to provide an ultrasonic transverse sealing method designed to eliminate the drawbacks of the known state of the art, and which, in particular, does not impair the packaging material.

According to the present invention, there is provided an ultrasonic transverse sealing method for sealing walls of a packaging material filled with a pourable food product, as claimed in Claim 1.

The barrier prevents direct contact between the melted thermoplastic material and the food product, and hence the formation of lumps.

The present invention also relates to an ultrasonic transverse sealing device for sealing the walls of a packaging material filled with a pourable food product.

According to the present invention, there is provided an ultrasonic transverse sealing device for sealing walls of a packaging material filled with a pourable food product, as claimed in Claim 7.

The transverse sealing device in Claim 7 is particularly advantageous by enabling the method in Claim 1 to be implemented by virtue of the contours of the first and second face of the jaws.

A preferred, non-limiting embodiment of the present invention will be described by way of example with reference to the accompanying drawings, in which:
Figure 1 shows a view in perspective of a transverse sealing device in accordance with the present invention;
Figure 2 shows a larger-scale schematic section, with parts removed for clarity, of the Figure 1 transverse sealing device at one operating step;
Figure 3 shows an even larger-scale section of the transverse sealing device at the Figure 2 operating step.

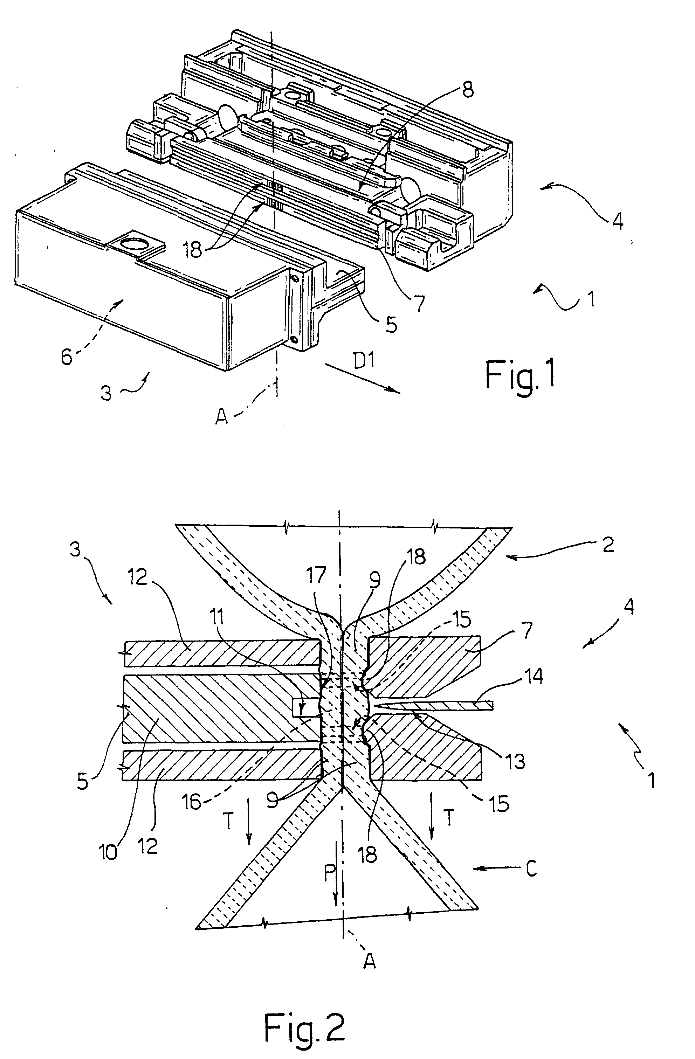

Figure 1 shows as a whole an ultrasonic transverse sealing device 1 for a machine for packaging pourable food products, such as pasteurized or UHT milk, fruit juice, wine, etc..

With reference to Figure 2, device 1 provides for forming sealed packages C of the pourable food product from a tube 2 of packaging material formed by longitudinally folding and sealing a web comprising heat-seal plastic material, and filled with the food product upstream from device 1.

Tube 2 is fed to device 1 in known manner along a vertical path P extending along an axis A.

With reference to Figure 1, device 1 comprises two facing jaws 3 and 4 extending in a direction D1 crosswise to axis A and supported in known manner by a known forming and sealing unit not shown in the accompanying drawings. Jaw 3 comprises a hammer 5, and an ultrasonic generator 6 connected to hammer 5; and jaw 4 comprises an anvil 7 facing hammer 5, and a cutting device 8.

With reference to Figure 2, tube 2 is fed continuously along path P, while each jaw 3, 4 is fed in known manner by said unit (not shown) along a respective annular path (not shown) comprising a portion T parallel to path P of tube 2. Along portions T, jaws 3 and 4 are set to the Figure 2 configuration, in which jaws 3 and 4 are pressed one against the other to locally deform tube 2. Tube 2 is substantially cylindrical and is deformed by jaws 3 and 4 to form, along tube 2, two opposite, mutually contacting walls 9.

Hammer 5 extends in direction D1 and comprises a central portion 10 for deforming and compressing walls 9 of tube 2, and having a slot 11; and an outer portion 12, which substantially provides for deforming tube 2 and bringing walls 9 together.

Anvil 7 extends in direction D1 and has a gap 13 aligned with slot 11; and cutting device 8 comprises a knife 14 housed inside gap 13 and movable back and forth with respect to anvil 7 to penetrate slot 11 in hammer 5 and cut walls 9 once these are sealed transversely. Jaws 3 and 4 seal walls 9 at two seal portions 15, and leave walls 9 separate at a portion 16 between the two portions 15 and substantially aligned with gap 13 and slot 11.

In Figure 2, jaws 3 and 4 are mated to expel the food product between walls 9, and are pushed against each other to obtain a pressure P1 at portions 15, which are swept by the ultrasonic vibrations generated by generator 6. The combined action of pressure P1 and the ultrasonic vibrations melts the heat-seal plastic material and provides for hermetically sealing walls 9 at seal portions 15.

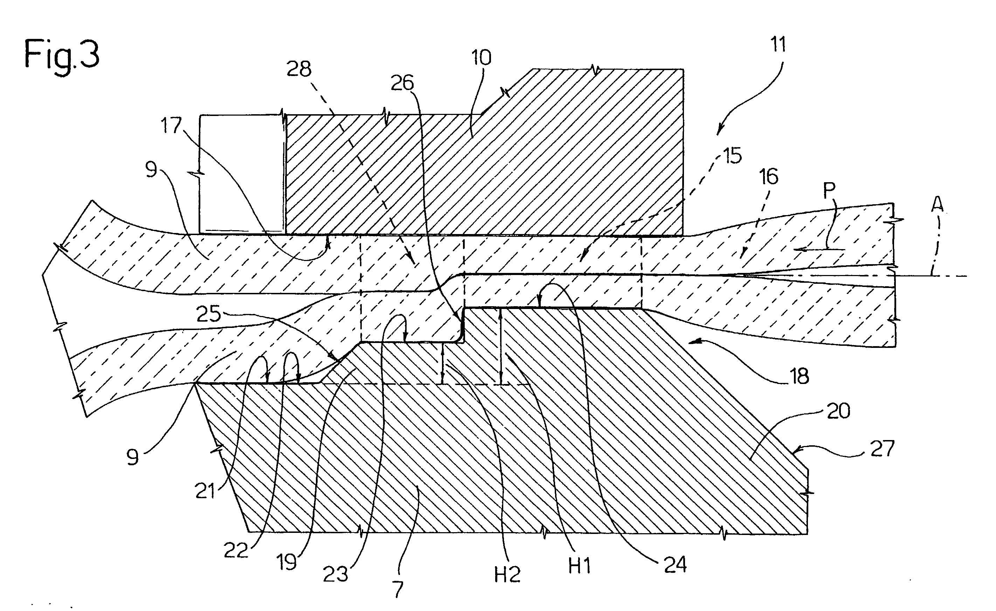

Central portion 10 of hammer 5 has a flat face 17 broken by slot 11 and facing anvil 7, which has two raised ribs 18 parallel to and on either side of slot 11. With reference to Figure 3, each rib 18 is defined by two steps 19, 20, so that anvil 7 has a stepped face 21 divided into two specularly symmetrical portions by gap 13. Each portion comprises a surface 22 parallel to face 17 and from which rib 18 projects; a surface 23 defining step 19 and parallel to surface 22; and a surface 24 defining step 20 and parallel to surface 22. Face 21 also comprises an inclined surface 25 connecting surfaces 23 and 22; a surface 26 perpendicular to surface 22 and connecting surfaces 23 and 24; and an inclined surface 27 connecting surface 24 to gap 13.

In actual use, in addition to portions 15 and 16 described previously, the contour of face 21 also defines, along walls 9, two portions 28 (only one shown in Figure 3), along which, walls 9 are subjected to a pressure P2 lower than pressure P1. That is, the deformability of the packaging material and the contour of face 21 enable pressures P1 and P2 to be obtained at respective adjacent portions 15 and 28 of walls 9 by applying only one compressive force to jaws 3 and 4. The difference between pressures P1 and P2 can be selected by appropriately defining the geometry of face 21. More specifically, step 20 has a height H1 with respect to surface 22, while step 19 has a height H2, smaller than H1, with respect to surface 22, so that the difference between pressures P1 and P2 is related to the difference between heights H1 and H2 of steps 20 and 19.

Steps 19 and 20 are the same length in direction D1, and have respective widths of the same order of magnitude in a direction parallel to path P.

Pressure P2 is so selected as to prevent the heat-seal plastic material from melting at portion 28, but, at the same time, to retain the molten material at portion 15. That is, portion 28 defines a barrier preventing contact between the molten plastic material and the food product.

In actual use, jaws 3 and 4 are brought together and pressed against each other in known manner as described partly herein. The compression of jaws 3 and 4 defines, along walls 9, two portions 15 subjected to a pressure P1 at steps 20; a portion 16 extending between the two portions 15 and where walls 9 are simply brought together; and two portions 28 adjacent to respective portions 15 and where walls 9 contact each other and are subjected to a pressure P2 at steps 19. As jaws 3 and 4 are compressed, the combined action of pressure P1 and the ultrasonic vibrations causes, at seal portions 15, localized melting of the heat-seal plastic material, which, subjected to pressure P1, is partly extruded towards portion 16 and is retained by portions 28 adjacent to seal portions 15. Immediately adjacent to each portion 28, the heat-seal plastic material may possibly lodge between walls 9. By virtue of pressure P2 being equally distributed along portion 28, however, the heat-seal plastic material is guided by walls 9 to assume a laminar shape, and sets without coming into contact with the food product or assuming forms which may impair the packaging material.

In other words, portions 15, 16 and 28 are in the form of strips extending in direction D1.

Though the present detailed description refers to a particular contour of faces 17 and 21, numerous changes may clearly be made without, however, departing from the scope of the present invention. For example, in a first variation not shown in the accompanying drawings, the face of the anvil is flat, and two raised ribs, each defined by two steps, extend along the hammer. In a further variation not shown, both the hammer and anvil comprise respective raised ribs cooperating mutually to generate two given distinct pressures at adjacent portions of the walls of the tube.

Clearly, changes may be made to the sealing device and method according to the present invention without, however, departing from the scope of the accompanying Claims.

In particular, the sealing device and method may be used for sealing pre-formed and individually filled packages made from blanks, as opposed to a continuous tube of packaging material.

## Claims

1. An ultrasonic transverse sealing method for sealing walls (9) of a packaging material (2) filled with a pourable food product, wherein the packaging material comprises at least one cover layer of heat-seal plastic material; the method providing for gripping two walls (9) of the packaging material (2) locally between a first and a second face (17; 21) of respective jaws (3, 4) of a transverse sealing device (1), so as to compress the walls (9) along a first portion (15) to a first pressure (P1) and subject the first portion (15) to ultrasonic vibrations to melt the heat-seal plastic material and seal the walls (9); the method being **characterized by** compressing the walls (9) one against the other by means of said jaws (3, 4) to a second pressure (P2), lower than the first pressure (P1), along a second portion (28) adjacent to the first portion (15), so as to form a barrier preventing contact between the melted material of the first portion (15) and the food product.

2. A method as claimed in Claim 1, **characterized in that** the first portion (15) and the second portion (28) correspond to two adjacent strips defined along the mutually contacting walls (9).

3. A method as claimed in Claim 1 or 2, **characterized in that** said packaging material defines a tube (2) filled with said pourable food product and fed along a path (P).

4. A method as claimed in Claim 3, **characterized in that** said first and said second portion (15, 28) are substantially the same length in a direction (D1) crosswise to the path (P).

5. A method as claimed in any one of the foregoing Claims, **characterized by** sealing said walls (9) simultaneously along two distinct first portions (15) separated by a third portion (16) of said walls (9): and by cutting the walls (9) of the tube (2) along said third portion (16) by means of a knife (14) .

6. A method as claimed in Claim 5, **characterized by** forming two second portions (28) adjacent to respective first portions (15); each first portion (15) being adjacent, on one side, to a respective second portion (28) and, on the opposite side, to the third portion (16) .

7. An ultrasonic transverse sealing device for carrying out the method as claimed in at least one of Claims 1 to 6; the device (1) comprising an ultrasonic generator (6), and a first and a second jaw (3, 4) along which extend respectively a first and a second face (17, 21); the device (1) being **characterized in that** the first and the second face (17, 21) are so contoured as to compress said walls (9) along the first and the second portion (15, 28) to said first and second pressure respectively, when the first and the second jaw (3, 4) grip said walls (9).

8. A device as claimed in Claim 7, **characterized in that** said first face (17) is flat and said second face (21) is stepped.

9. A device as claimed in Claim 8, **characterized in that** said second face (21) comprises a first and a second step (19, 20) adjacent to each other and facing the first face (17).

10. A device as claimed in Claim 9, **characterized in that** the second face (21) comprises a first surface (22) parallel to the first face (17); a second surface (23) defining the first step (19) and parallel to the first face (17); and a third surface (24) defining the second step (20) and parallel to the first face (17).

11. A device as claimed in Claim 10, **characterized in that** said second face (21) comprises a fourth surface (25) connecting the first and second surface (22, 23) and sloping with respect to the first surface (22); and a fifth surface (26) connecting the second and third surface (23, 24) and perpendicular to the second surface (23) .

## Patentansprüche

1. Verfahren zum Ultraschallquerversiegeln der Wände (9) eines mit einem fließfähigem Nahrungsmittel gefüllten Verpackungsmaterials (2), wobei das Verpackungsmaterial wenigstens eine Deckschicht aus Heißsiegelkunststoffmaterial aufweist; wobei das Verfahren dafür sorgt, daß zwei Wände (9) des Verpackungsmaterials (2) lokal zwischen einer ersten und einer zweiten Seite (17; 21) jeweiliger Backen (3, 4) einer Querversiegelungsvorrichtung (1) ergriffen werden, so daß die Wände (9) entlang eines ersten Abschnitts (15) mit einem ersten Druck (P1) zusammengedrückt werden und der erste Abschnitt (15) Ultraschallvibrationen unterworfen wird, um das Heißsiegelkunststoffmaterial zu schmelzen und die Wände (9) zu versiegeln; wobei das Verfahren **dadurch gekennzeichnet ist, daß** die Wände (9) mittels der Backen (3, 4) entlang eines zweiten Abschnitts (28) angrenzend an den ersten Abschnitt (15) mit einem zweiten Druck (P2) zusammengedrückt werden, der niedriger als der erste Druck (P1) ist, so daß eine Sperre gebildet ist, die den Kontakt zwischen dem geschmolzenen Material des ersten Abschnitts (15) und dem Nahrungsmittel verhindert.

2. Verfahren nach Anspruch 1, **dadurch gekennzeichnet, daß** der erste Abschnitt (15) und der zweite Abschnitt (28) zwei angrenzenden Streifen entsprechen, die entlang der miteinander in Kontakt stehenden Wände (9) gebildet sind.

3. Verfahren nach Anspruch 1 oder 2, **dadurch gekennzeichnet, daß** das Verpackungsmaterial einen Schlauch (2) bildet, der mit dem fließfähigen Nahrungsmittel gefüllt ist und entlang eines Pfades (P) zugeführt wird.

4. Verfahren nach Anspruch 3, **dadurch gekennzeichnet, daß** der erste und der zweite Abschnitt (15, 28) in einer Richtung (D1) kreuzweise zu dem Pfad (P) im wesentlichen die gleiche Länge haben.

5. Verfahren nach einem der vorhergehenden Ansprüche, **dadurch gekennzeichnet, daß** die Wände (9) gleichzeitig entlang zwei verschiedener erster Abschnitte (15) versiegelt werden, die durch einen dritten Abschnitt (16) der Wände (9) getrennt sind, und daß die Wände (9) des Schlauchs (2) entlang des dritten Abschnitts (16) mittels eines Messers (14) geschnitten werden.

6. Verfahren nach Anspruch 5, **dadurch gekennzeichnet, daß** zwei zweite Abschnitte (28) angrenzend an jeweilige erste Abschnitte (15) gebildet sind; wobei jeder erste Abschnitt (15) an einer Seite jeweils an einen zweiten Abschnitt (18) und an der gegenüberliegenden Seite an den dritten Abschnitt (16) angrenzt.

7. Ultraschallquerversiegelungsvorrichtung zur Durchführung des Verfahrens nach wenigstens einem der Ansprüche 1 bis 6; wobei die Vorrichtung (1) einen Ultraschallgenerator (6) und eine erste und eine zweite Backe (3, 4) aufweist, entlang welcher sich eine erste bzw. eine zweite Seite (17, 21) erstreckt; wobei die Vorrichtung (1) **dadurch gekennzeichnet ist, daß** die erste und die zweite Seite (17, 21) eine solche Kontur haben, daß die Wände (9) entlang des ersten und des zweiten Abschnitts (15, 28) mit dem ersten bzw. zweiten Druck zusammengedrückt werden, wenn die erste und die zweite Backe (3, 4) die Wände (9) ergreifen.

8. Vorrichtung nach Anspruch 7, **dadurch gekennzeichnet, daß** die erste Seite (17) flach ist und die zweite Seite (21) abgestuft ist.

9. Vorrichtung nach Anspruch 8, **dadurch gekennzeichnet, daß** die zweite Seite (21) eine erste und eine zweite Stufe (19, 20) aufweist, die aneinander angrenzen und der ersten Seite (17) zugewandt sind.

10. Vorrichtung nach Anspruch 9, **dadurch gekennzeichnet, daß** die zweite Seite (21) eine erste Fläche (22) parallel zu der ersten Seite (17) aufweist; eine zweite Fläche (23), die die erste Stufe (19) bildet und parallel zu der ersten Seite (17) ist; und eine dritte Fläche (24), die die zweite Stufe (20) bildet und parallel zu der ersten Seite (17) ist.

11. Vorrichtung nach Anspruch 10, **dadurch gekennzeichnet, daß** die zweite Seite (21) eine vierte Fläche (25) aufweist, welche die erste und die zweite Fläche (22, 23) verbindet und bezüglich der ersten Fläche (22) abgeschrägt ist; und eine fünfte Fläche (26), welche die zweite und die dritte Fläche (23, 24) verbindet und senkrecht zu der zweiten Fläche (23) ist.

## Revendications

1. Procédé de scellement transversal par ultrasons pour le soudage de parois (9) d'un matériau d'emballage (2) rempli avec un produit alimentaire fluide, dans lequel le matériau d'emballage comprend au moins une couche de revêtement en matière plastique thermosoudable, le procédé comprenant le serrage de deux parois (9) du matériau d'emballage (2) localement entre une première et une deuxième faces (17, 21) de mâchoires respectives (3, 4) d'un dispositif de soudage transversal (1) de façon à comprimer les parois (9) le long d'une première région (15) à une première pression (P1) et à exposer la première région (15) à des vibrations ultrasonores afin de fondre la matière plastique thermosoudable et de souder les parois (9) ;
le procédé étant **caractérisé par** le compression des parois (9) l'une contre l'autre au moyen des dites mâchoires (3, 4) à une deuxième pression (P2), plus faible que la première pression (P1), le long d'une deuxième région (28) adjacente à la première région (15), de façon à former une barrière empêchant le contact entre la matière fondue de la première région (15) et le produit alimentaire.

2. Procédé selon la revendication 1, **caractérisé en ce que** la première région (15) et la deuxième région (28) correspondent à deux bandes adjacentes définies le long des parois mutuellement en contact (9).

3. Procédé selon la revendication 1 ou 2, **caractérisé en ce que** le dit matériau d'emballage définit un tube (2) rempli avec le dit produit alimentaire fluide et avancé le long d'un chemin (P).

4. Procédé selon la revendication 3, **caractérisé en ce que** les dites première et deuxième régions (15, 28) ont sensiblement la même longueur dans une direction (D1) transversale au chemin (T).

5. Procédé selon une quelconque des revendications précédentes, **caractérisé par** le soudage des dites parois (9) simultanément le long de deux premières régions distinctes (15) séparées par une troisième région (16) des dites parois (9) ; et par coupe des parois (9) du tube (2) le long de la dite troisième région (16) au moyen d'une lame (14).

6. Procédé selon la revendication 5, **caractérisé par** le formage de deux deuxièmes régions (28) adjacentes aux premières régions respectives (15), chaque première région (15) étant adjacente, d'un côté, à une deuxième région respective (28) et, du côté opposé, à la troisième région (16).

7. Dispositif de scellement transversal par ultrasons pour la mise en oeuvre du procédé selon au moins une des revendications 1 à 6, le dispositif (1) comprenant un générateur d'ultrasons (6) et une première et une deuxième mâchoires (3, 4) le long desquelles s'étendent respectivement une première et une deuxième faces (17, 21) ;
le dispositif (1) étant **caractérisé en ce que** les première et deuxième faces (17, 21) ont un profil tel qu'elles compriment les dites parois (9) le long des première et deuxième régions (15, 28) aux dites première et deuxième pressions respectivement, lorsque les première et deuxième mâchoires (3, 4) compriment les dites parois (9).

8. Dispositif selon la revendication 7, **caractérisé en ce que** la dite première face (17) est plane et la dite deuxime face (21) est à gradins.

9. Dispositif selon la revendication 8, **caractérisé en ce que** la dite deuxième face (21) comprend un premier et un deuxième gradins (19, 20) mutuellement adjacents et tournés vers la première face (17).

10. Dispositif selon la revendication 9, **caractérisé en ce que** la deuxième face (21) comprend une première surface (22) parallèle à la première face (17) ; une deuxième surface (23) définissant le premier gradin (19) et parallèle à la première face (17) ; et une troisième surface (24) définissant le deuxième gradin (20) et parallèle à la première face (17).

11. Dispositif selon la revendication 10, **caractérisé en ce que** la dite deuxième face (21) comprend une quatrième surface (25) reliant les première et deuxième surfaces (22, 23) et inclinée par rapport à la première surface (22) ; et une cinquième surface (26) reliant les deuxième et troisième surfaces (23, 24) et perpendiculaire à la deuxième surface (23).
